# EUROPEAN PATENT APPLICATION

(11) **EP 2 478 775 A1**
(43) Date of publication of application: **25.07.2012**
(21) Application number: 12000905.5
(22) Date of filing: 14.03.2008
(51) Int. Cl.: A23L 1/222, A23L 1/236, A23L 2/38, A23L 2/385, A23L 2/58, A23L 2/60

(54) **Beverage products with non-nutritive sweetener and bitterant**

(30) Priority: 14.03.2007 US 686260
(62) Divisional of application: 08743897.4
(71) Applicant: The Concentrate Manufacturing Company of Ireland, Hamilton HM 12 (BM)
(72) Inventor: Roy, Glen, Beacon, NY 12508 (US); Lee, Thomas, Scarsdale, NY 10583 (US)
(74) Representative: Duxbury, Stephen

(57) **Abstract**

Aspects of the invention relate to beverage compositions, including, for example, concentrated and ready-to-drink formulations sweetened with at least one non-nutritive sweetener and further including a bitterant compound in an amount sufficient to reduce the lingering sweet aftertaste of the non-nutritive sweetener(s). In certain illustrative embodiments, the non-nutritive sweetener(s) may be one or more of the following: a steviol glycoside, Lo Han Guo, thaumatin, monatin, monellin, brazzein, sucralose. Another aspect of the invention relates to a method that combines a non-nutritive sweetener having a lingering sweet aftertaste with a bitterant compound to create a mixture such that when the mixture is contained in a beverage, the bitterant compound is present in an amount sufficient to reduce the lingering sweet aftertaste of the non-nutritive sweetener.

## Description

This application claims priority to U.S. provisional Application Serial No. 11/686,260, filed March 14, 2007 and entitled *Beverage Products with Non-Nutritive Sweetener and Bitterant* (Attorney Docket No. 056943.00033).

### FIELD OF THE INVENTION

This invention relates to beverages and other beverage products, such as beverage concentrates and the like. In particular, this invention relates to beverages and other beverage products having formulations incorporating non-nutritive sweeteners and having improved flavor profiles or nutritional characteristics.

### BACKGROUND

It has long been known to produce beverages of various formulations. Improved and new formulations are desirable to meet changing market demands. In particular, there is perceived market demand for beverages having alternative nutritional characteristics, including, for example, alternative calorie content. Also, there is perceived market demand for beverages having alternative flavor profiles, including good taste, mouthfeel, etc. In addition, there is consumer interest in beverages and other beverage products, such as beverage concentrates, etc. whose formulations make greater use of natural ingredients, that is, ingredients distilled, extracted, concentrated or similarly obtained from harvested plants and other naturally occurring sources, with limited or no further processing.

The development of new beverage formulations, for example, new beverage formulations employing alternative sweeteners, flavorants, flavor enhancing agents and the like, presents challenges in addressing associated bitterness and/or other off-tastes. In addition, such challenges typically are presented in new beverage formulations developed for alternative nutritional and/or flavor profiles. Also, there is need for new beverage formulations which can satisfactorily meet the combination of objectives including nutritional characteristics, flavor, shelf life, and other objectives.

Development of new beverage formulations has faced obstacles. For example, U.S. Patent No. 4,956,191, incorporated herein by reference in its entirety, suggests that carbonated beverages which contain blends of saccharin or the Stevia extract with aspartame tend to be less organoleptically pleasing than those containing sugar.

It is therefore an object of the present invention to provide beverages and other beverage products. It is an object of at least certain embodiments of the invention (that is, not necessarily all embodiments of the invention) to provide beverages and other beverage products having desirable taste properties and flavor profiles. It is an object of at least certain (but not necessarily all) embodiments of the invention to provide beverages and other beverage products having improved formulations. These and other objects, features and advantages of the invention or of certain embodiments of the invention will be apparent to those skilled in the art from the following disclosure and description of exemplary embodiments.

### BRIEF SUMMARY

In accordance with one aspect, a beverage product is provided, such a beverage, beverage concentrate or the like, which is sweetened with a non-nutritive sweetener component comprising at least one non-nutritive sweetener having a lingering sweet aftertaste, and which further comprises a bitterant in an amount sufficient to reduce (i.e., to partially, substantially or completely eliminate) the lingering sweet aftertaste. In certain exemplary embodiments the bitterant is used in an amount (i.e., at a concentration or level) which, in the beverage formulation in question, is non-perceptible, i.e., below its taste threshold in the formulation. That is, the bitterant is used in an amount which is less than the amount required by most consumers to detect the flavor of the bitterant as an independent or distinct flavor in the beverage. In certain exemplary embodiments non-nutritive sweetener having lingering sweet aftertaste is used together with nutritive sweetener, e.g., sugar, high fructose corn syrup (HFCS) or the like, and bitterant effective in the formulation in question to reduce (i.e., partially or entirely mask or otherwise diminish or entirely eliminate) the lingering sweet aftertaste.

In accordance with another aspect, reduced calorie beverages or corresponding concentrates are provided. A reduced calorie beverage according to this aspect of the disclosure is sweetened with a non-nutritive sweetener component (referred to here in some instances, for convenience, simply as non-nutritive sweetener) giving a lingering sweet aftertaste to the beverage and comprising one or more non-nutritive sweeteners, and further comprises a bitterant, i.e., at least one bitterant compound, in an amount sufficient to reduce the lingering sweet aftertaste of the non-nutritive sweetener. In certain embodiments, the bitterant comprises limonin. In certain embodiments, the bitterant comprises a mixture of limonin and naringin. The reduced calorie beverage may be sweetened entirely with one or more non-nutritive sweeteners or with a combination of nutritive and non-nutritive sweeteners.

In accordance with another aspect, reduced calorie beverages or corresponding concentrates are provided. A reduced calorie beverage according to this aspect of the disclosure is sweetened with a non-nutritive sweetener component (referred to here in some instances, for convenience, simply as non-nutritive sweetener) giving a lingering sweet aftertaste to the beverage and comprising one or more non-nutritive sweeteners, and further comprises a bitterant, i.e., at least one bitterant compound, in an amount sufficient to reduce the lingering sweet aftertaste of the non-nutritive sweetener. In certain embodiments, the bitterant comprises limonin. In certain embodiments, the bitterant comprises a mixture of limonin and naringin. The reduced calorie beverage may be sweetened entirely with one or more non-nutritive sweeteners or with a combination of nutritive and non-nutritive sweeteners.

A lingering sweet aftertaste refers to a sweet flavor caused, at least in part, by one or more non-nutritive sweeteners in the reduced calorie beverage that remains in the mouth of the consumer after swallowing the reduced calorie beverage. As used herein, a lingering sweet aftertaste extends beyond the time of perceived sweetness associated with sucrose or HFCS sweetened beverages. All artificial sweeteners and non-nutritive natural sweeteners have a time of sweetness extinction that greatly exceeds the sweetness time perceived for sucrose or HFCS. As used herein, a "bitterant" is a compound or combination of compounds, e.g., in some cases added as a material also having other components, which compound is effective as a bitterant in the beverage product in question. For example, in certain exemplary embodiments wherein the bitterant is a plurality of bitterant compounds, such compounds may be concentrated, extracted or otherwise derived from several different species of fruits within the same genus or from species of different genera. In certain exemplary embodiments, the bitterant comprises one ore more compounds obtained from citrus fruits and/or citrus juices. In certain exemplary embodiments, the bitterant comprises limonin. In certain exemplary embodiments, the bitterant comprises a mixture of limonin and naringin. In certain exemplary embodiments of the disclosed beverages, the weight percent of the bitterant in the beverage is between about 50 parts per trillion and 500 parts per million, e.g. between about 1 part per million to about 250 parts per million.

A lingering sweet aftertaste refers to a sweet flavor caused, at least in part, by one or more non-nutritive sweeteners in the reduced calorie beverage that remains in the mouth of the consumer after swallowing the reduced calorie beverage. As used herein, a lingering sweet aftertaste extends beyond the time of perceived sweetness associated with sucrose or HFCS sweetened beverages. All artificial sweeteners and non-nutritive natural sweeteners have a time of sweetness extinction that greatly exceeds the sweetness time perceived for sucrose or HFCS. As used herein, a "bitterant" is a compound or combination of compounds, e.g., in some cases added as a material also having other components, which compound is effective as a bitterant in the beverage product in question. For example, in certain exemplary embodiments wherein the bitterant is a plurality of bitterant compounds, such compounds may be concentrated, extracted or otherwise derived from several different species of fruits within the same genus or from species of different genera. In certain exemplary embodiments, the bitterant comprises one ore more compounds obtained from citrus fruits and/or citrus juices. In certain exemplary embodiments, the bitterant comprises limonin. In certain embodiments, the bitterant comprises a mixture of limonin and naringin. In certain exemplary embodiments of the disclosed beverages, the weight percent of the bitterant in the beverage is between about 50 parts per trillion and 500 parts per million, e.g. between about 1 part per million to about 250 parts per million.

Unless clearly stated otherwise, reference here to a non-nutritive sweetener or to a non-nutritive sweetener component means one or more non-nutritive sweeteners. That is, the non-nutritive sweetener may be a single sweetener or a combination of non-nutritive sweeteners. In those embodiments employing multiple non-nutritive sweeteners, the lingering sweet aftertaste may be contributed by one or more of them. Different lingering sweet aftertastes may be contributed by different ones of the non-nutritive sweeteners, and the bitterant component may be used in accordance with this disclosure to reduce one or more of such multiple lingering sweet aftertastes. In certain exemplary embodiments the same bitterant compound reduces multiple different lingering sweet aftertastes. In other embodiments, multiple bitterant compounds used are differently efficacious in reducing the multiple lingering sweet aftertastes.

In accordance with another aspect, a reduced calorie beverage concentrate is provided. In certain exemplary embodiments, the beverage concentrate is a syrup. In yet other exemplary embodiments, the beverage concentrate is a dry powder mix. The reduced calorie beverage concentrate is sweetened with non-nutritive sweetener, i.e., at least one non-nutritive sweetener, and further comprises a bitterant component, i.e., at least one bitterant compound, in an amount sufficient to reduce the lingering sweet aftertaste of the non-nutritive sweetener. In certain exemplary embodiments, the bitterant comprises limonin. In select embodiments, a plurality of bitterant compounds are utilized in the beverage concentrate. In certain exemplary embodiments, the plurality of bitterants originate from multiple plant species. In certain such embodiments, both naringin and limonin are utilized together as the bitterant. In certain exemplary embodiments, the weight percent of the bitterant in the beverage concentrate is between about 50 parts per trillion and 500 parts per million, e.g. between about 1 part per million to about 250 parts per million.

In accordance with another aspect, a reduced calorie beverage concentrate is provided. In certain exemplary embodiments, the beverage concentrate is a syrup. In yet other exemplary embodiments, the beverage concentrate is a dry powder mix. The reduced calorie beverage concentrate is sweetened with non-nutritive sweetener, i.e., at least one non-nutritive sweetener, and further comprises a bitterant component, i.e., at least one bitterant compound, in an amount sufficient to reduce the lingering sweet aftertaste of the non-nutritive sweetener. In certain exemplary embodiments, the bitterant comprises limonin. In select embodiments, a plurality of bitterant compounds are utilized in the beverage concentrate. In certain exemplary embodiments, the plurality of bitterants originate from multiple plant species. In certain such embodiments, both naringin and limonin are utilized together as the bitterant. In certain exemplary embodiments, the weight percent of the bitterant in the beverage concentrate is between about 50 parts per trillion and 500 parts per million, e.g. between about 1 part per million to about 250 parts per million.

Another aspect of the invention relates to sweetener products, e.g., products in a dry, liquid or other form, containing a mixture of non-nutritive sweetener and bitterant in an amount sufficient to reduce a lingering sweet aftertaste of the non-nutritive sweetener. In certain exemplary embodiments, the bitterant comprises limonin. In certain exemplary embodiments, the bitterant comprises limonin and naringin. The bitterant in such mixture, at least in certain embodiments, is present in an unrecognizable amount, that is, an amount insufficient (at the recommended or intended use level for the mixture in food) to generate an independently perceived bitter flavor in food. The terms non-perceptible amount, non-perceptible concentration and non-perceptible level are used here and in the claims interchangeably with the terms unrecognizable amount, unrecognizable concentration and unrecognizable level. In certain embodiments, the product comprises one or more packages holding the sweetener, that is, holding a predetermined single serving quantity of the mixture of non-nutritive sweetener and bitterant. In certain embodiments according to this aspect of the disclosure, instructions are also provided for combining the mixture with an aqueous solution or other food, e.g., into a beverage to be sweetened. In other embodiments, instructions may be omitted. The one or more bitterant compounds are present in a predetermined amount in the mixture, that is effective to reduce, e.g., to mask the lingering sweet aftertaste of the non-nutritive sweetener(s) in food.

Another aspect of the invention relates to sweetener products, e.g., products in a dry, liquid or other form, containing a mixture of non-nutritive sweetener and bitterant in an amount sufficient to reduce a lingering sweet aftertaste of the non-nutritive sweetener. In certain exemplary embodiments, the bitterant comprises limonin. In certain exemplary embodiments, the bitterant comprises limonin, and naringin. The bitterant in such mixture, at least in certain embodiments, is present in an unrecognizable amount, that is, an amount insufficient (at the recommended or intended use level for the mixture in food) to generate an independently perceived bitter flavor. The terms non-perceptible amount, non-perceptible concentration and non-perceptible level are used here and in the claims interchangeably with the terms unrecognizable amount, unrecognizable concentration and unrecognizable level. In certain embodiments, the product comprises one or more packages holding the sweetener, that is, holding a predetermined single serving quantity of the mixture of non-nutritive sweetener and bitterant. In certain embodiments according to this aspect of the disclosure, instructions are also provided for combining the mixture with an aqueous solution or other food, e.g., into a beverage to be sweetened. In other embodiments, instructions may be omitted. The one or more bitterant compounds are present in a predetermined amount in the mixture, that is effective to reduce, e.g., to mask the lingering sweet aftertaste of the non-nutritive sweetener(s) in food.

In accordance with another aspect, a clear beverage is provided comprising water, one or more non-nutritive sweetener and a bitterant component in an amount effective to reduce the lingering sweet aftertaste of the non-nutritive sweetener. As used here, substantially clear means that the beverages have substantially no turbidity and substantially no color.

It will be appreciated by those skilled in the art, given the benefit of the following description of certain exemplary embodiments of the beverage and other beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### DETAILED DESCRIPTION OF CERTAIN EXEMPLARY EMBODIMENTS

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastants, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener, acidulant and flavoring, and typically also acidulant, coloring and/or carbonation. Exemplary flavorings which may be suitable for at least certain formulations in accordance with this disclosure include cola flavoring, citrus flavoring, spice flavorings and others. Carbonation in the form of carbon dioxide may be added for effervescence. Preservatives can be added if desired, depending upon the other ingredients, production technique, desired shelf life, etc. Optionally, caffeine can be added. Certain exemplary embodiments of the beverages disclosed here are cola-flavored carbonated beverages, characteristically containing carbonated water, sweetener, kola nut extract and/or other flavoring, caramel coloring, phosphoric acid, and optionally other ingredients. Additional and alternative suitable ingredients will be recognized by those skilled in the art given the benefit of this disclosure.

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, coffee beverages, tea beverages, dairy beverages, powdered soft drinks, as well as liquid, slurry or solid concentrates, flavored waters, enhanced waters, fruit juice and fruit juice-flavored drinks, sport drinks, and alcoholic products. At least certain exemplary embodiments of the beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in u.s. patent no. 7,052,725. Methods of producing treated water are known to those of ordinary skill in the art and include deionization, distillation, filtration and reverse osmosis ("r-o"), among others. The terms "treated water," "purified water,", "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "full-calorie" beverage formulation is one fully sweetened with a nutritive sweetener. The term "nutritive sweetener" refers generally to sweeteners which provide significant caloric content in typical usage amounts, e.g., more than about 5 calories per 8 oz. serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, non-nutritive sweeteners include both natural non-nutritive sweeteners (e.g., steviol glycosides, Lo Han Guo, etc.) and artificial non-nutritive sweeteners (e.g., neotame, etc.). However, for natural beverage products disclosed here, only natural non-nutritive sweeteners are employed. Commonly accepted potency figures for certain non-nutritive sweeteners include, for example:

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspartame | 200 times as sweet as sugar |
| Saccharin | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Sweeteners suitable for use in various embodiments of the beverages disclosed here include nutritive and non-nutritive, natural and artificial or synthetic sweeteners. Suitable non-nutritive sweeteners and combinations of such sweeteners are selected for the desired nutritional characteristics, taste profile for the beverage, mouthfeel and other organoleptic factors. Non-nutritive artificial sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. Alitame may be less desirable for caramel-containing beverages where it has been known to form a precipitate. In certain exemplary embodiments the beverage product employs aspartame as the sweetener, either alone or with other sweeteners. In certain other exemplary embodiments the sweetener comprises aspartame and acesulfame potassium. Other non-nutritive sweeteners suitable for at least certain exemplary embodiments include, for example, sorbitol, mannitol, xylitol, glycyrrhizin, D-tagatose, erythritol, meso-erythritol, malitol, maltose, lactose, fructo-oligosaccharides, Lo Han Guo powder, steviol glycosides, e.g., rebaudiosides such as Rebaudioside A, stevioside, etc., acesulfame, aspartame, other dipeptides, cyclamate, sucralose, saccharin, xylose, arabinose, isomalt, lactitol, maltitol, trehalose, and ribose, and protein sweeteners such as thaumatin, monellin, brazzein, L-alanine and glycine, related compounds, and mixtures of any of them. Lo Han Guo powder, steviol glycosides, e.g., rebaudiosides such as Rebaudioside A, stevioside, etc. and related compounds, as discussed further below, are natural non-nutritive sweeteners. It will be within the ability of those skilled in the art, given the benefit of this disclosure, to select suitable non-nutritive sweetener (e.g., one or combination of non-nutritive sweeteners, either alone or together with nutritive sweetener) for a particular embodiment of the beverage products disclosed here employing one or more bitterants to mask an off-note taste of the non-nutritive sweetener(s).

In at least certain exemplary embodiments of the beverages disclosed here, the sweetener component can include nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, Lo Han Guo juice concentrate and/or others. Such sweeteners are present in at least certain exemplary embodiments in an amount of from about 0.1 % to about 20% by weight of the beverage, such as from about 6% to about 16% by weight, depending upon the desired level of sweetness for the beverage. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of nonsugar solids which could adversely affect the flavor, color or consistency of the beverage.

The sweeteners are edible consumables suitable for consumption and for use in beverages. By "edible consumables" is meant a food or beverage or an ingredient of a food or beverage for human or animal consumption. The sweetener or sweetening agent used here and in the claims can be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

Non-nutritive, potent sweeteners typically are employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

As mentioned above, at least certain exemplary embodiments of the beverages disclosed here employ steviol glycosides, e.g., rebaudiosides such as Rebaudioside A, stevioside, etc. or related compounds, or mixtures of any of them, for sweetening. These compounds can be obtained by extraction or the like from the stevia plant. Stevia (e.g., Stevia rebaudiana bectoni) is a sweet-tasting plant. The leaves contain a complex mixture of natural sweet diterpene glycosides. Steviol glycosides, e.g., rebaudiosides such as Rebaudioside A, stevioside, etc. are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The following nonsweet constituents also have been identified in the leaves of stevia plants: labdane, diterpene, triterpenes, sterols, flavonoids, volatile oil constituents, pigments, gums and inorganic matter.

The sweetener Lo Han Guo, which has various different spellings and pronunciations and is abbreviated here in some instances as LHG, can be obtained from fruit of the plant family Cucurbitaceae, tribe Jollifieae, subtribe Thladianthinae, genus Siraitia. LHG often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Lo Han Guo fruit. LHG contains triterpene glycosides or mogrosides, which constituents may be used as LHG.sweeteners. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. Lo Han Guo can be used as the juice or juice concentrate, powder, etc. Preferably LHG juice contains at least about 0.1 %, e.g., from 0.1 % to about 15%, mogrosides, preferably mogroside V, mogroside IV, 11-oxo-mogroside V, siamenoside and mixtures thereof. LHG can be produced, for example, as discussed in U.S. Patent No. 5,411,755, incorporated herein by reference in its entirety. Sweeteners from other fruits, vegetables or plants also may be used as natural or processed sweeteners or sweetness enhancers in at least certain exemplary embodiments of the beverages disclosed here.

Aspects of the invention relate to a reduced calorie beverage comprising a bitterant component, e.g., one or more bitterant compounds in an amount (i.e., a combined amount where multiple bitterant compounds are employed together) sufficient to mask the lingering sweet aftertaste of non-nutritive sweetener(s) in the beverage. In certain exemplary embodiments, the bitterant comprises citrus bitterants. In certain exemplary embodiments, the bitterant comprises naringin and/or limonin to mask the lingering aftertaste. Methods for obtaining citrus bitterents are known to those skilled in the art. As illustrative examples, U.S. Pat. No. 6,544,577 and U.S. Pat. No. 6,054,168, both incorporated by reference in their entirety, disclose methods and systems for obtaining the citrus bitterants naringin and limonin from citrus fruits. According to one disclosed method of obtaining bitterants, a diafiltration step may be performed on citrus fruits or their juices. In certain embodiments disclosed in there, more than half of the total quantity of the bitterants is removed from the fruit juice.

While the level of natural bitterant(s) varies with the originating fruit, typical ranges are between about 500 ppm and about 1200 ppm of naringin are present in common grapefruit sources and about 5 ppm to about 100 ppm of limonin are common in orange sources. While the above illustrative example directly refers to oranges and grapefruit as sources of bitterants, those skilled in the art will readily appreciate in view of this disclosure, that other fruits may be utilized, including non-citrus fruits. In certain embodiments a plurality of bitterants originate from several species of fruits within the same genus. In other embodiments, the bitterants employed are from organic different genera or other unrelated sources, e.g., cocoa, tea, coffee, grains, vegetables, nuts, beer, wine, etc.

It will be readily appreciated by those skilled in the art upon reading this disclosure, that the various methods and systems for obtaining the bitterants, e.g., extracting or otherwise deriving them, will vary, as will the amount and specific bitterants utilized in the bitterant component, depending on any of multiple factors. Exemplary factors that may influence the methods, systems and ingredients include, but are not limited to, the desired flavor profile of the particular beverage or other product in question, the intended distribution and storage of the product, economic considerations, the concentration of the non-nutritive sweetener in the product, the selection and amount of other ingredients in the product.

The bitterant may be manufactured, distributed, and/or stored in different physical states and/or forms, including, for example, as a solid, an aqueous solution or a slurry. In certain embodiments, aqueous solutions may be introduced and/or removed to alter the state or form. Various aqueous solutions may include, for example, water, optionally carbonated water or a bitterant having a different concentration than the compound. Likewise, a sweetener, such as, e.g., a single-serving portion of dry sweetener comprising bitterant and non-nutritive sweetener, be manufactured, distributed, and/or stored in different physical states and/or forms, including, for example, as a solid, an aqueous solution or a slurry.

According to one aspect of the invention, an unrecognizable amount of bitterant compound is used in conjunction with a non-nutritive sweetener in a beverage product, such as ready-to-drink beverages or concentrates, such as a dry powder or syrup. As used herein, the term "an unrecognizable amount of bitterant" means a quantity or concentration of bitterant that alters the flavor profile of the beverage or other food, but is not itself recognizable as contributing a bitter flavor to the food. Thus, a person consuming such beverage would not discern from the bitterant added to the formulation in accordance with this disclosure, a bitter taste. In contrast, however, in a comparison of substantially duplicate formulations, one with and the other without the bitterant component, a typical consumer would be able to detect a desirable reduction in the lingering sweet aftertaste, e.g., elimination of such lingering aftertaste.

Another aspect of the present disclosure relates to non-beverage products containing non-nutritive sweetener (here, again, meaning one or more non-nutritive sweeteners) and bitterant. That is, as disclosed above, another aspect of this disclosure provides sweetener products, such as consumer-useable sweetener containing non-nutritive sweetener and bitterant. The bitterant component in at least certain exemplary embodiments of such consumer-useable sweetener products is present in an unrecognizable amount sufficient to reduce the lingering sweet aftertaste of the at least one non-nutritive sweetener, especially, e.g., when certain instructions are followed by the consumer in using the sweetener product.

In certain embodiments, the product is provided in the form of multiple, single-serving packages or packets in which the sweetener can be stored, distributed and used. Thus, for example, such packages hold and store dry or concentrated liquid sweetener mixture of non-nutritive sweetener(s) and one or more bitterant compounds for masking a lingering sweet aftertaste of the non-nutritive sweetener(s). In certain exemplary embodiments, instructions for use of the sweetener mixture are provided, e.g., for combining the mixture with a specific beverage or other food, for use as a sweetener generally, for use in an aqueous solution, etc. The instructions may be provided in any form, such as printing on the exterior of the product packaging, for example, on the exterior of a cardboard box containing the sweetener mixture and/or on the exterior of packet holding a single-serving of the sweetener mixture. In other embodiments, instructions may be provided on a separate insert contained within the product, such as, e.g., as printing on one or more readable surfaces.

In certain exemplary embodiments, instructions are not necessary and are not provided, because the consumer is aware of the amount of sweetener mixture to be used, or the amount to be used is readily estimated. As an example, consumers who use packets of sweetener in coffee or other beverages generally apply a consistent number of sweetener packets per volume of beverage. For example, a consumer may routinely place 2 one-ounce packets of sweetener in their coffee regardless whether if the sweetener is sugar, aspartame, sucralose, etc. Thus, certain embodiments of the product may not include instructions for adding the sweetener mixture to coffee or other aqueous beverage solution. The one or more bitterant compounds of the bitterant component of the sweetener mask the lingering sweet aftertaste of the non-nutritive sweetener(s). As disclosed above, in at least certain exemplary embodiments the bitterant component is present in the sweetener mixture in an unrecognizable amount.

Acid used in beverages disclosed here can serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric, malic, tartaric, lactic, formic, ascorbic, hy fumaric, gluconic, succinic, maleic and adipic and mixtures of any of them. The acid can be used in solution form, for example, and in an amount sufficient to provide the desired pH of the beverage. Typically, for example, the one or more acids of the acidulant are used in amount, collectively, of from about 0.01% to about 1.0% by weight of the beverage, e.g., from about 0.05% to about 0.5% by weight of the beverage, such as 0.1% to 0.25% by weight of the beverage, depending upon the acidulant used, desired ph, other ingredients used, etc. The pH of at least certain exemplary embodiments of the beverages disclosed here can be a value within the range of from about 2.0 to about 5.0. The acid in certain exemplary embodiments enhances beverage flavor. Too much acid can impair the beverage flavor and result in sourness or other off-taste, while too little acid can make the beverage taste flat.

The particular acid or acids chosen and the amount used will depend, in part, on the other ingredients, the desired shelf life of the beverage product, as well as effects on the beverage pH, titratable acidity, and taste. Those skilled in the art, given the benefit of this disclosure, will recognize that when preparing beverage products containing peptide-based artificial sweeteners such as aspartame, the resulting beverage composition is best maintained below a certain pH to retain the sweetening effect of the artificial sweetener. In the formation of calcium-supplemented beverages, the presence of calcium salts increases the pH which requires additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Certain exemplary embodiments of the beverage products disclosed here also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04% by weight, with an amount of about 0.03% being typical for certain beverages. The amount will depend, of course, on the type of alkaline agents and on the degree to which the pH is to be adjusted.

The beverage products disclosed here optionally contain a flavor composition, i.e., one or more flavor components, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. In certain exemplary embodiments of the beverage concentrates and beverages a cola flavor component is used or a tea flavor component. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices can be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices can be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, litchi, lemon, orange, lime, tangerine, tangerine, mandarin orange, tangelo, and pomelo and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2% to about 40% by weight of the beverage. Typically, juice can be used, if at all, in an amount of from about 1% to about 20% by weight.

Certain such juices which are lighter in color can be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices can be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Carbon dioxide is used to provide effervescence to certain exemplary embodiments of the beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 60° F (16° C) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

Optionally, caffeine can be added to various embodiments of the beverages disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of a purity acceptable for use in foods and beverages. The caffeine can be natural or synthetic in origin.

The beverage concentrates and beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations thereof. Preservatives can be used in amounts not exceeding mandated maximum levels under applicable laws and regulations. The level of preservative used typically is adjusted according to the planned final product pH, as well as an evaluation of the microbiological spoilage non-nutritiveial of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

### EXAMPLES

The following examples are specific embodiments of the present invention but are not intended to limit it. All percentages are by weight unless otherwise stated.

Those of ordinary skill in the art will understand that, for convenience, some ingredients are described here in certain cases by reference to the original form of the ingredient in which it is used in formulating or producing the beverage product. Such original form of the ingredient may differ from the form in which the ingredient is found in the finished beverage product. Thus, for example, in certain exemplary embodiments of the beverage products according to this disclosure, sucrose and liquid sucrose would typically be substantially homogenously dissolved and dispersed in the beverage. Likewise, other ingredients identified as a solid, concentrate (e.g., juice concentrate), etc. would typically be homogenously dispersed throughout the beverage or throughout the beverage concentrate, rather than remaining in their original form. Thus, reference to the form of an ingredient of a beverage product formulation should not be taken as a limitation on the form of the ingredient in the beverage product, but rather as a convenient means of describing the ingredient as an isolated component of the product formulation.

Notwithstanding the claims, the present invention is also defined by the following clauses.

1. A reduced calorie beverage comprising:

water;

at least one non-nutritive sweetener having a lingering sweet aftertaste and;

a lingering sweet aftertaste reducing bitterant component comprising limonin, said lingering sweet aftertaste reducing bitterant component being present at a level sufficient to reduce the lingering sweet aftertaste of the non-nutritive sweetener.

2. The reduced calorie beverage of Clause 1, wherein the at least one non-nutritive sweetener is selected from the group consisting of a steviol glycoside, Lo Han Guo, thaumatin, monatin, monellin, brazzein, sucralose and combinations of any of them.

3. The reduced calorie beverage of Clause 1, wherein the bitterant component further comprises naringin.

4. The reduced calorie beverage product of Clause 1 wherein the bitterant component is present in the beverage product at a non-perceptible level.

5. The reduced calorie beverage of Clause 1, wherein the concentration of the bitterant component is between 50 parts per trillion and 500 parts per million.

6. The reduced calorie beverage of Clause 1, further comprising erythritol and d-tagatose.

7 The reduced calorie beverage of Claim 1, further comprising flavoring selected from the group consisting of cola flavors, juices, fruit flavors, botanical flavors, spices, and combinations thereof.

8. The reduced calorie beverage of Clause 1, wherein the concentration of the bitterant component is between about 1 part per million and about 250 parts per million.

9. The reduced calorie beverage of Clause 1, wherein the amount of the bitterant component is sufficient to eliminate the lingering sweet aftertaste of the non-nutritive sweetener component.

10. The reduced calorie beverage of Clause 1, further comprising at least one nutritive sweetener.

11. A reduced calorie beverage concentrate for a reduced calorie beverage, comprising:

a non-nutritive sweetener component having a lingering sweet aftertaste; and

a lingering sweet aftertaste reducing bitterant component comprising limonin in an amount sufficient to reduce the lingering sweet aftertaste of the non-nutritive sweetener component when the concentrate is mixed with a diluent to make a beverage.

12. The reduced calorie beverage concentrate of Clause 11, wherein the concentrate is a syrup.

13. The reduced calorie beverage concentrate of Clause 11, wherein the non-nutritive sweetener component comprises a non-nutritive sweetener selected from the group of: a steviol glycoside, Lo Han Guo, thaumatin, monatin, monellin, brazzein, sucralose and combinations of any of them.

14. The reduced calorie beverage concentrate of Clause 11, wherein the bitterant component further comprises naringin.

15. The reduced calorie beverage concentrate of Clause 11, wherein the concentration of the bitterant component is between 50 parts per trillion and 500 parts per million.

16. The reduced calorie beverage concentrate of Clause 11, wherein the concentration of the bitterant component is between about 1 part per million and about 250 parts per million.

17. The reduced calorie beverage of Clause 11, further comprising at least one nutritive sweetener.

18. A method of making a beverage, comprising combining at least (i) a non-nutritive sweetener component having a lingering sweet aftertaste, and (ii) bitterant component comprising limonin in an amount effective in a beverage to reduce the lingering sweet aftertaste of the non-nutritive sweetener component.

19. The method of Clause 18, wherein the non-nutritive sweetener is selected from the group consisting of a steviol glycoside, Lo Han Guo, thaumatin, monatin, monellin, brazzein, sucralose and combinations of any of them.

20. The method of Clause 18, wherein the concentration of the bitterant component is between 50 parts per trillion and 500 parts per million.

21. The method of Clause 18, further comprising combining erythritol and d-tagatose with the mixture.

22. The method of Clause 18, further comprising combining flavoring with the mixture, wherein the flavoring is selected from the group consisting of cola flavors, juices, fruit flavors, botanical flavors, spices, and combinations of any of them.

23. The method of Clause 18, wherein the concentration of the bitterant component is between about 1 part per million and about 250 parts per million.

24. The method of Clause 18, wherein the amount of the bitterant component is sufficient to eliminate the lingering sweet aftertaste of the non-nutritive sweetener component.

25. The method of Clause 18, wherein the bitterant component further comprises naringin.

26. The method of Clause 18, further comprising combining nutritive sweeteners with the mixture.

27. A sweetener mixture comprising:

non-nutritive sweetener component comprising a non-nutritive sweetener and having a lingering sweet aftertaste; and

a bitterant component comprising limonin in an amount effective to reduce the lingering sweet aftertaste of the non-nutritive sweetener in food.

28. The sweetener mixture of Clause 27 packaged with instructions for use of the sweetener mixture in food.

29 The sweetener mixture of Clause 27 packaged in a packet as a dry mixture in a single serving size amount.

30. The sweetener mixture of Clause 27 wherein the packet carries instructions for use of the sweetener mixture in food.

31. The sweetener mixture of Clause 27, packaged in a plurality of packages, each package having a predetermined amount of sweetener mixture therein.

32. The sweetener mixture of Clause 27 wherein the bitterant component further comprises naringin.

33 The sweetener mixture of Clause 27, wherein the concentration of the bitterant component is between 50 parts per trillion and 500 parts per million.

34. The beverage product of Clause 1, wherein the beverage product is clear.

Given the benefit of the above disclosure and description of exemplary embodiments, it will be apparent to those skilled in the art that numerous alternative and different embodiments are possible in keeping with the general principles of the invention disclosed here. Those skilled in this art will recognize that all such various modifications and alternative embodiments are within the true scope and spirit of the invention. The appended claims are intended to cover all such modifications and alternative embodiments. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A reduced calorie beverage comprising:
water;
at least one natural non-nutritive sweetener having a lingering sweet aftertaste selected from the group consisting of a steviol glycoside, Lo Han Guo powder, thaumatin, monatin, monellin, brazzein, and a mixture of any of them; and
a lingering sweet aftertaste reducing bitterant component, said lingering sweet aftertaste reducing bitterant component being present at a level sufficient to reduce the lingering sweet aftertaste of the non-nutritive sweetener in the beverage,
wherein the concentration of the sweet aftertaste reducing bitterant component is between about 250 parts per billion to 31 parts per million, at a amount that does not generate a bitter flavour in the beverage.

2. The beverage of Claim 1, further comprising erythritol and d-tagatose, and/or further comprising flavoring selected from the group consisting of cola flavors, juices, fruit flavors, botanical flavors, spices, and combinations thereof and/or further comprising at least one nutritive sweetener.

3. The beverage of Claim 1 or 2, wherein the amount of the bitterant component is sufficient to eliminate the lingering sweet aftertaste of the non-nutritive sweetener component.

4. The beverage according to any of the preceding claims wherein the bitterant component comprises limonin and/or naringin, and/or the bitterant component is present in the reduced calorie_beverage at a non-perceptible level.

5. The beverage according to any of the preceding claims further comprising at least one nutritive sweetener.

6. The beverage according to any of the preceding claims wherein the bitterant is present at a concentration of at least 1 part per million.

7. The beverage according to any of the preceding claims wherein the natural non-nutritive sweetener comprises a sweetening amount of rebaudioside D.

8. A reduced calorie beverage concentrate for a reduced calorie beverage, comprising:
a natural non-nutritive sweetener component having a lingering sweet aftertaste selected from the group consisting of a steviol glycoside, Lo Han Guo powder, thaumatin, monatin, monellin, brazzein, and a mixture of any of them; and
a lingering sweet aftertaste reducing bitterant component in an amount sufficient to reduce the lingering sweet aftertaste of the non-nutritive sweetener component when the concentrate is mixed with a diluent to make a beverage;
wherein the concentration of the bitterant component in the beverage is from about 125 parts per billion to 31 parts per million when the beverage is prepared with 1 part concentrate to 5 parts water.

9. The concentrate according to claim 8, wherein the natural non-nutritive sweetener comprises a sweetening amount of rebaudioside D.

10. The concentrate according to claims 8 or 9, comprising the features of the beverage according to any of the claims 2-7, apart from the diluent water.

11. Method of making a reduced calorie beverage comprising mixing together a concentrate according to any of the claims 8-10 and a diluent, preferably water.

12. A sweetener mixture comprising at least one natural non-nutritive sweetener having a lingering sweet aftertaste selected from the group consisting of a steviol glycoside, Lo Han Guo powder, thaumatin, monatin, monellin, brazzein, and a mixture of any of them, preferably being rebaudioside D, and
a lingering sweet aftertaste reducing bitterant component, said lingering sweet aftertaste reducing bitterant component being present at a level sufficient to reduce the lingering sweet aftertaste of the non-nutritive sweetener in food,
wherein the concentration of the sweet aftertaste reducing bitterant component is between about 50 parts per trillion and 500 parts per million.

13. The sweetener mixture of Claim 12 packaged with instructions for use of the sweetener mixture in food, preferably packaged in a packet as a dry mixture in a single serving size amount or packaged in a plurality of packages, each package having a predetermined amount of sweetener mixture therein.

14. The sweetener mixture of Claims 12 or 13 wherein the bitterant component comprises limonin and/or naringin.
